# EUROPEAN PATENT APPLICATION

(11) **EP 4 701 161 A1**
(43) Date of publication of application: **25.02.2026**
(21) Application number: 24195137.5
(22) Date of filing: 19.08.2024
(51) Int. Cl.: H04L 67/12, H04L 67/56, H04W 4/48

(54) **A METHOD OF PROVIDING INTERNET CONNECTIVITY FOR AN IN-VEHICLE-INFOTAINMENT APPLICATION PROGRAM**

(71) Applicant: N-Dream AG, 8004 Zürich (CH)
(72) Inventor: von Rechenberg, Andrin, 8706 Meilen (CH); Meyer, Laurent, 8304 Wallisellen (CH)
(74) Representative: Schaad, Balass, Menzl & Partner AG

(57) **Abstract**

A method of providing internet connectivity for an in-vehicle-infotainment (IVI) application program running on an IVI system of a vehicle, the method comprising the steps of:
- providing by the IVI system an in-vehicle wireless network with a wireless access point;
- coupling a mobile device to the in-vehicle wireless network using the wireless access point;
- providing by the mobile device an identifier list comprising one or more identifiers of one or more IVI application programs executable on the IVI system;
- comparing by the IVI system an identifier of an IVI application program running on the IVI system to the one or more identifiers of the identifier list;
- providing a proxy server by the mobile device;
- establishing by the IVI system a connection to the proxy server via the wireless network and routing traffic of the application program running on the IVI system to a web server via the proxy server of the mobile device if the identifier of the IVI application program running on the IVI system is included in the identifier list.

## Description

The present invention relates to in-vehicle-infotainment (IVI) systems, and more specifically to methods of providing internet connectivity for application programs running on such systems.

In recent years, the automotive industry has undergone significant advancements with the integration of sophisticated in-vehicle-infotainment (IVI) systems. These systems are designed to provide a variety of functionalities, ranging from entertainment and navigation to telematics and communication services, thereby enhancing the driving experience. IVI systems typically include features such as audio and video playback, gaming GPS navigation etc.

A critical aspect of modern IVI systems is their ability to connect to the internet, which enables real-time access to information and cloud-based services. Internet connectivity allows IVI systems to access online content, stream music, videos, play games and podcasts from online platforms, use online maps and traffic information for real-time route planning, utilize internet-based communication tools such as VoIP and messaging apps, receive software and firmware updates to improve functionality and security, and sync with smartphones, tablets, and other smart devices to extend the capabilities of the IVI system.

Traditional methods of providing internet connectivity to IVI systems include built-in cellular modules, tethering through a smartphone's mobile data connection utilizing dedicated mobile hotspots. However, these approaches often come with limitations such as additional hardware costs, complex setup procedures, and potential cybersecurity risks.

Built-in cellular modules increase the cost of the IVI system, require additional data plans which are usually much more expensive than for a normal mobile device such as a smartphone.

Tethering via smartphones can be cumbersome and may fail to function properly with systems such as CarPlay or Android Auto because they require the car's WIFI to be in access point (AP) mode and not in client mode. Additionally, the smartphone is likely to turn off the hotspot when it detects that it is in the car to enable CarPlay or Android Auto over a WIFI client connection.

All of the above-mentioned approaches are exposed to potential cybersecurity threats, such as unauthorized access and data breaches. Ensuring a secure connection is paramount to protect user data and maintain the integrity of the IVI system. Existing solutions may not provide seamless integration between the IVI system and mobile devices, leading to complications in system functionality.

The object of the present invention is to provide internet to an IVI system which at least partially improves the prior art.

The problem is solved by the method of the present invention as defined in Claim 1, the IVI system of the present invention as defined in Claim 10, the infotainment system of the present invention as defined in Claim 14 and the computer program product of the present invention as defined in Claim 15.

Preferred embodiments are subject of the dependent claims and the description as well as the figures.

The present invention refers to a method of providing internet connectivity for an in-vehicle-infotainment (IVI) application program running on an IVI system of a vehicle. The method comprising the steps of:
- Providing by the IVI system an in-vehicle wireless network with a wireless access point;
- Coupling a mobile device to the in-vehicle wireless network using the wireless access point;
- Providing by the mobile device an identifier list comprising one or more identifiers of one or more IVI application programs executable on the IVI system;
- Comparing by the IVI system an identifier of an IVI application program running on the IVI system to the one or more identifiers of the identifier list;
- Providing a proxy server by the mobile device;
- Establishing by the IVI system a connection to the proxy server via the wireless network and routing traffic of the application program running on the IVI system to a web server via the proxy server of the mobile device if the identifier of the IVI application program running on the IVI system is included in the identifier list.

As mentioned above, providing internet to an IVI system through a mobile device by means of a hotspot on the mobile device may be cumbersome since the mobile device is likely to turn off the hotspot when it detects that it is in the car to enable CarPlay or Android Auto over a WIFI Client connection.

Establishing the internet connection to the IVI system through a proxy server on the mobile device has the advantage that a more stable internet connection with improved interoperability between the mobile device and the IVI system can be provided while exploiting the mobile data connection of the mobile device. Additionally, the inventive method enhances security because it may be operated as an at least partially closed system; the identifier list on the mobile device reducing the risk of connecting corrupt applications to the internet, thus eliminating the need for a firewall. This method also optimizes bandwidth usage by allowing selective prioritization of traffic, enhancing overall data efficiency. Furthermore, it offers enhanced flexibility, as users can switch between different mobile devices to provide the best connection available at any given time. Maintenance is simplified since security protocols and connectivity are managed via the mobile device, reducing the need for frequent software updates on the IVI system itself. Cost efficiency is achieved by leveraging existing mobile data plans, potentially eliminating the need for additional subscriptions or hardware. Reliability is improved with a familiar mobile device interface for managing network settings, and latency is reduced, ensuring smoother and faster data exchanges for IVI applications. The method is scalable for fleet management, reduces hardware dependency by removing the need for extra connectivity components, and enhances data privacy by funneling traffic through a controlled mobile device. Additionally, the system supports remote management and diagnostics through the mobile device, facilitating easier troubleshooting and updates. Seamless updates can be rolled out through regular mobile OS or mobile app updates, always keeping the system up-to-date with the latest security patches and performance improvements. Lastly, the method ensures compatibility with multiple mobile operating systems, making it versatile for diverse user bases with different types of mobile devices.

In the context of the invention a closed system refers to a system that allows only previously reviewed application to be installed or operate on the system. The iOS operating system on an iPhone is an example for a closed operating system.

In a preferred embodiment of the invention the method further comprises the steps of providing a private key and a public key associated with the private key, generating a digital signature of the identifier list using the private key, and storing the public key in the IVI system. The IVI system then verifies the digital signature of the identifier list using the public key prior to comparing the identifier of the IVI application program running on the IVI system to the one or more identifiers of the identifier list. The inclusion of a private key and public key pair, along with the generation and verification of a digital signature for the identifier list, significantly enhances the security of the system. This preferred method ensures that only authorized and verified identifier lists are used, protecting the IVI system from tampering and unauthorized access. By verifying the digital signature using the public key stored within the IVI system before any comparison of application identifiers, the preferred method ensures the integrity and authenticity of the identifier list. This added layer of cryptographic security further mitigates the risk of cyber-attacks and unauthorized communications, making the IVI system more robust against potential security threats.

Preferably the mobile device obtains the identifier list and the digital signature of the identifier list from the web server. The provision of the identifier list and the digital signature of the identifier list from the web server has the advantage that real-time verification and updates are enabled. This ensures that the IVI system always uses the most current and accurate identifier lists, reflecting any newly validated or revoked application identifiers immediately. Consequently, the system can dynamically respond to emerging security threats or changes in application status, thereby maintaining a high level of security and integrity. This real-time capability not only enhances the security of the IVI system but also provides users with up-to-date application management, ensuring a continually optimized and protected in-vehicle experience.

In a preferred embodiment of the invention the method further comprises the steps of providing an identification tag by the IVI system and reading the identification tag by the mobile device. The mobile device obtains access data for connecting to the wireless access point using identification data encoded in the identification tag. By incorporating an identification tag provided by the IVI system and read by the mobile device, the preferred method ensures a more reliable connection setup. The identification tag encodes access data necessary for connecting to the wireless access point, allowing the use of more complex passwords without compromising user convenience. This approach not only simplifies the connection process but also enhances security by enabling the use of robust, difficult-to-guess passwords. Consequently, it reduces the risk of unauthorized access to the in-vehicle wireless network, ensuring that only authenticated devices can connect. This added layer of security strengthens the overall protection of the IVI system and its communication channels, making the in-car experience both safer and more secure.

Preferably the identification tag comprises an optically readable code, more preferably the optically readable code is a bar code and most preferably the optically readable code is a data matrix code or a QR code. The use of an optically readable code, such as a bar code, data matrix code, or QR code, significantly increases the security of the connection process. These codes can be quickly and accurately scanned by the mobile device, ensuring that the access data for connecting to the wireless access point is transmitted without errors. The complexity and encryption inherent in data matrix codes and QR codes make them highly resistant to tampering and forgery, thereby preventing unauthorized devices from gaining access to the in-vehicle wireless network. This preferred method enhances the overall security of the IVI system by ensuring that only authorized devices, which possess the means to accurately scan and interpret the optically readable code, can establish a connection. This additional layer of security makes the in-vehicle experience more secure while maintaining ease of use for authorized users.

In a preferred embodiment of the invention the identification data comprises a uniform resource locator (URL) to a web resource containing the access data for connecting to the wireless access point. By embedding a uniform resource locator (URL) within the identification data, which directs to a web resource containing the access data for connecting to the wireless access point, the method provides a highly secure and flexible way to manage network connectivity. This approach ensures that the access data is stored securely on a remote server and can be updated dynamically without requiring modifications to the identification tag itself. Consequently, it reduces the risk of unauthorized access as the URL and associated access data can be changed frequently and managed centrally. Additionally, this method facilitates streamlined and simplified connectivity, whereby users simply scan the identification tag and are directed to the most current access data, enhancing both security and user experience. The dynamic nature of using a URL ensures that the access data can be protected using standard web security measures, further securing the IVI system's wireless network.

Preferably the IVI system comprises a near field communication chip or a Bluetooth transmitter providing access data for connecting to the wireless access point. Integrating a near field communication (NFC) chip or a Bluetooth transmitter within the IVI system to provide access data for connecting to the wireless access point offers several security and convenience advantages. NFC and Bluetooth technologies enable secure and immediate short-range data exchange, ensuring that access data is transmitted directly to the authorized mobile device while minimizing the risk of interception by unauthorized parties. This approach enhances security by relying on proximity-based interaction, thereby reducing the likelihood of remote attacks. Additionally, it facilitates a seamless and user-friendly connection process, allowing users to connect their mobile devices with a simple tap or automatic Bluetooth pairing process. This preferred method ensures that access data can be provided efficiently and securely, enhancing the user experience while maintaining a high level of network security within the IVI system.

In a preferred embodiment of the invention the method further comprises the step of running a mobile application program in foreground on the mobile device, wherein the mobile application program provides the proxy server. Running the mobile application program in the foreground to provide the proxy server ensures that the proxy connection remains stable and active. When a mobile application runs in the foreground, it is less likely to be interrupted or throttled by the mobile device's operating system, which can happen to background processes. This continuous and reliable proxy connection prevents inadvertent disconnections and interruptions in internet connectivity for the IVI system. Consequently, it ensures a more consistent and dependable user experience, as the IVI applications relying on the proxy server maintain their network access without disruptions. Additionally, keeping the mobile application in the foreground allows for better monitoring and management of the proxy services, enhancing overall system reliability and performance.

Preferably the method further comprises the step of running a mobile application program in foreground on the mobile device, wherein the mobile application program controls the mobile device to exchange data with the IVI system while the IVI application program runs on the IVI system.

By integrating the proxy server into the mobile application program that controls the exchange of data between the mobile device and the IVI system, such as a controller app for mobile gaming, the method ensures that the application runs in the foreground and keeps the proxy server consistently active. Running this integrated application in the foreground not only maintains a stable and uninterrupted proxy connection but also allows for real-time data exchange between the mobile device and the IVI system. This setup is particularly beneficial for applications requiring high responsiveness and continuous interaction, such as mobile gaming controllers. As a result, users experience enhanced performance and reliability, with minimal risk of proxy disconnections or data transmission delays. This approach optimizes the overall functionality of the IVI system by ensuring that critical data exchanges are managed efficiently while maintaining a secure and stable internet connection.

The present invention further refers to an in-vehicle-infotainment (IVI) system of a vehicle comprising at least one processor configured to
- provide an in-vehicle wireless network with a wireless access point to which a mobile device is connectable;
- comparing an identifier of an IVI application program running on the IVI system to one or more identifiers of an identifier list provided by the mobile device;
- establishing a connection to a proxy server provided by the mobile device;
- routing traffic of the IVI application program running on the IVI system via the wireless network to a web server via the proxy server of the mobile device if the identifier of the IVI application program running on the IVI system is included in the identifier list.

In a preferred embodiment of the invention the at least one processor of the IVI system is configured to provide an identification tag having identification data encoded therein for providing access data of the wireless access point.

By configuring at least one processor of the IVI system to provide an identification tag with encoded identification data for access to the wireless access point, the preferred system ensures a streamlined and highly secure method for connectivity. This identification tag, which can be easily scanned by the mobile device, simplifies the process of connecting to the in-vehicle wireless network, reducing setup time and minimizing user error. The encoded identification data ensures that only authorized devices can access the network, significantly enhancing security by preventing unauthorized access. Additionally, this preferred system allows for the use of complex and robust passwords without compromising ease of use. By automating the provision of access data through the identification tag, the IVI system not only maintains a high level of security but also enhances user convenience and reliability in establishing and maintaining network connections.

Preferably the IVI system comprises a data store having stored thereon a public key, wherein the at least one processor of the IVI system is configured to verify a digital signature of the identifier list using the public key prior to comparing the identifier of the IVI application program running on the IVI system to the one or more identifiers of the identifier list. By incorporating a data store within the IVI system that holds a public key and configuring the processor to verify the digital signature of the identifier list using this public key, the preferred system significantly enhances security and data integrity. This cryptographic verification ensures that only trusted and authenticated identifier lists are used, protecting the preferred IVI system from potential tampering and unauthorized modifications. Before any comparison of the application identifiers, the digital signature verification process guarantees the authenticity and integrity of the identifier list, preventing malicious or corrupted applications from gaining access. This not only fortifies the security of the IVI system against cyber threats but also establishes a robust framework for maintaining a secure and reliable environment for in-vehicle applications. Having a public key infrastructure (PKI) within the IVI system provides an additional layer of protection, ensuring that only legitimate application programs are allowed to interact with internet resources, thereby enhancing overall system stability and security.

The present invention further refers to a vehicle comprising an IVI system according to the invention.

The present invention further refers to an infotainment system comprising the IVI system according to the invention and a mobile device, wherein the mobile device comprises at least one processor configured to
- couple to the in-vehicle wireless network using the wireless access point;
- provide an identifier list comprising one or more identifiers of one or more IVI application programs executable on the IVI system;
- provide a proxy server for routing traffic of the IVI application program running on the IVI system to a web server via the proxy server if the identifier of the IVI application program running on the IVI system is included in the identifier list.

The present invention further refers to a computer program product comprising computer program code for providing internet connectivity for an IVI application program running on an IVI system of a vehicle, the computer program code configured to control at least one processor of the IVI system such that the at least one processor executes the steps of
- provide an in-vehicle wireless network with a wireless access point to which a mobile device is connectable;
- comparing an identifier of an IVI application program running on the IVI system to one or more identifiers of an identifier list provided by the mobile device;
- establishing a connection to a proxy server provided by the mobile device via the wireless network;
- routing traffic of the IVI application program running on the IVI system to a web server via the proxy server of the mobile device if the identifier of the IVI application program running on the IVI system is included in the identifier list.

All beneficial effect mentioned above in connection with the inventive method of providing internet connectivity for an IVI application program running on an IVI system of a vehicle are also valid for the inventive, IVI system of a vehicle, a vehicle comprising the inventive IVI system, an infotainment system comprising the inventive IVI system and the inventive computer program product.

The invention is explained in greater detail in the following on the basis of some exemplary embodiments represented in the figure. In the figures, which are each merely schematic:

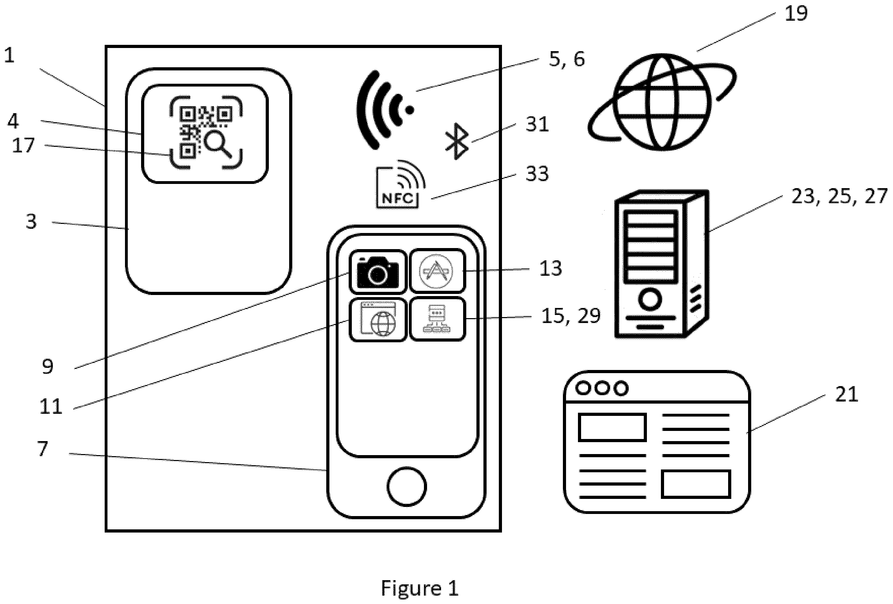

- Fig. 1: shows an IVI system in a vehicle which is connected to the internet over a mobile device.

Figure 1 discloses a vehicle 1 comprises an IVI system 3 with a preinstalled IVI connect software 4 and a WIFI access point 5, which distributes a local network 6. A mobile device 7 such as a smartphone or a tablet is located in proximity to the vehicle 1, preferably inside of the vehicle 1. The mobile device has preinstalled apps such as a camera app 9, a browser app 11 and an Appstore app 13. From the Appstore app 13 the user can download and install a companion app 15 (proxy server app). In a first step, the IVI connect app 4 starts monitoring the local network 6 of the WIFI access point 5 to see if a mobile device 7 with the companion app 15 has joined the local network 6, by scanning a predefined network IP range and checking if ports that the companion app uses for the proxy server are open. In a second step the IVI connect software 4 displays a QR-Code 17 for an URL to connect the vehicle 1 to the internet 19. In a third step the QR code 17 is scanned with the camera app 9 of the mobile device 7. Depending on whether the companion app 15 is already installed and launched on the mobile device 7, there are several options to proceed with the fourth step:

In case the companion app 15 is not installed on the mobile device 7, the QR-Code URL 17 opens a website 21, which is hosted on a web server 23 and stores access data 25 comprising an SSID and a password for a unique ID (not shown). The website 21 redirects the user to the App store app 13 to install the companion app 15. If supported by the App Store app 13, the access data 25 is passed to the companion app 15 install process as metadata. After the companion app 15 is installed and launched, the companion app 15 tries to first get the access data 25 from the metadata of the install process. If that is not supported, the companion app 15 recovers the access data 25 from the web server 23 using the unique ID.

If the companion app 15 is already installed and not launched, the QR-Code URL 17 directly opens the companion app 15 by using the app deep link functionality of operating system of the mobile device 7 and parses the access data 25 from the app deep link.

If the companion app 15 is installed and is launched by the user without scanning the QR-Code 17, a QR-Code scanner (usually the camera app 9) appears that allows the user to scan the QR-Code 17 displayed by the IVI connect software 4 and parses the display URL to get the access data 25.

In a fifth step the companion app 15 has the access data 25 and uses the SSID and the password of it to connect to the access point 5 of the vehicle 1. For example, on a mobile device 7 that has an Android operating system this is done by using the NetworkRequest Android API with a WifiNetworkSpecificier containing the SSID and password. Then the companion app 15 binds its process to the network using the ConnectivityManager (bindProcessToNetwork). This is done to prevent notifications on the mobile device that notify the user that the WIFI access point 5 connection does not support an internet connection. On the other hand, on a mobile device 7 that has an iOS operating system this done using the NEHotspotConfiguration class (specifying a SSID and a password). After connecting the mobile device 7 to the access point 5 of the vehicle 1 the mobile device 7 is now part of the local network 6. In a sixth step the companion app 15 is launched and requests an app route list 27, from the webserver 23. The companion app 15 also starts a proxy server 29 on a predefined port and waits for incoming connections from the IVI connect software 4 over the local network 6. In a seventh step the IVI connect software 4 discovers the proxy server 29 and requests the app routes list 27 from the companion app 15 and verifies its authenticity using an OEM Public Key. In an eight step the IVI connect software 4 configures the IVI system 3 to route internet traffic of the installed applications 9, 11, 13, 15 based on the app routes list 27 via the proxy server 29, by providing a VPN-Service to the operating system and tunneling internet data requests of the matching installed applications 9, 11, 13, 15 over the proxy server 29.

In an alternative embodiment in the second step the IVI connect software 4 does not displays a QR-Code 17 for an URL to connect the vehicle 1 to the internet 19 but instead connects to the mobile device 7 via a Bluetooth module 31. This Bluetooth connection is then used to exchange the access data 25.

In another alternative embodiment in the second step the vehicle 1 comprises an NFC chip 33, which is used to exchange the access data 25 with the mobile device 7.

## Claims

1. A method of providing internet connectivity for an in-vehicle-infotainment (IVI) application program running on an IVI system of a vehicle, the method comprising the steps of:
- providing by the IVI system an in-vehicle wireless network with a wireless access point;
- coupling a mobile device to the in-vehicle wireless network using the wireless access point;
- providing by the mobile device an identifier list comprising one or more identifiers of one or more IVI application programs executable on the IVI system;
- comparing by the IVI system an identifier of an IVI application program running on the IVI system to the one or more identifiers of the identifier list;
- providing a proxy server by the mobile device;
- establishing by the IVI system a connection to the proxy server via the wireless network and routing traffic of the application program running on the IVI system to a web server via the proxy server of the mobile device if the identifier of the IVI application program running on the IVI system is included in the identifier list.

2. The method according to claim 1, comprising the steps of providing a private key and a public key associated with the private key, generating a digital signature of the identifier list using the private key, and storing the public key in the IVI system, wherein the IVI system verifies the digital signature of the identifier list using the public key prior to comparing the identifier of the IVI application program running on the IVI system to the one or more identifiers of the identifier list.

3. The method according to claim 2, wherein the mobile device obtains the identifier list and the digital signature of the identifier list from the web server.

4. The method according to one of the preceding claims, comprising the steps of providing an identification tag by the IVI system and reading the identification tag by the mobile device, wherein the mobile device obtains access data for connecting to the wireless access point using identification data encoded in the identification tag.

5. The method according to claim 4, wherein the identification tag comprises an optically readable code, preferably a bar code, particularly preferably a data matrix code or a QR code.

6. The method according to claim 4 or 5, wherein the identification data comprises a uniform resource locator (URL) to a web resource containing the access data for connecting to the wireless access point.

7. The method according to one of the claims 1 to 3, wherein the IVI system comprises a near field communication chip or a Bluetooth transmitter providing access data for connecting to the wireless access point.

8. The method according to one of the preceding claims, comprising running a mobile application program in foreground on the mobile device, wherein the mobile application program provides the proxy server.

9. The method according to one of the preceding claims, comprising running a mobile application program in foreground on the mobile device, wherein the mobile application program controls the mobile device to exchange data with the IVI system while the IVI application program runs on the IVI system.

10. An in-vehicle-infotainment (IVI) system of a vehicle comprising at least one processor configured to
- provide an in-vehicle wireless network with a wireless access point to which a mobile device is connectable;
- comparing an identifier of an IVI application program running on the IVI system to one or more identifiers of an identifier list provided by the mobile device;
- establishing a connection to a proxy server provided by the mobile device;
- routing traffic of the IVI application program running on the IVI system via the wireless network to a web server via the proxy server of the mobile device if the identifier of the IVI application program running on the IVI system is included in the identifier list.

11. The IVI system according to claim 10, wherein the at least one processor of the IVI system is configured to provide an identification tag having identification data encoded therein for providing access data of the wireless access point.

12. The IVI system according to claim 10 or 11, wherein the IVI system comprises a data store having stored thereon a public key, wherein the at least one processor of the IVI system is configured to verify a digital signature of the identifier list using the public key prior to comparing the identifier of the IVI application program running on the IVI system to the one or more identifiers of the identifier list.

13. A vehicle comprising an IVI system according to one of the claims 10 to 12.

14. An infotainment system comprising the IVI system according to one of the claims 10 to 12 and a mobile device, wherein the mobile device comprises at least one processor configured to
- couple to the in-vehicle wireless network using the wireless access point;
- provide an identifier list comprising one or more identifiers of one or more IVI application programs executable on the IVI system;
- provide a proxy server for routing traffic of the IVI application program running on the IVI system to a web server via the proxy server if the identifier of the IVI application program running on the IVI system is included in the identifier list.

15. A computer program product comprising computer program code for providing internet connectivity for an IVI application program running on an IVI system of a vehicle, the computer program code configured to control at least one processor of the IVI system such that the at least one processor executes the steps of
- provide an in-vehicle wireless network with a wireless access point to which a mobile device is connectable;
- comparing an identifier of an IVI application program running on the IVI system to one or more identifiers of an identifier list provided by the mobile device;
- establishing a connection to a proxy server provided by the mobile device via the wireless network;
- routing traffic of the IVI application program running on the IVI system to a web server via the proxy server of the mobile device if the identifier of the IVI application program running on the IVI system is included in the identifier list.
